# EUROPEAN PATENT APPLICATION

(11) **EP 4 501 530 A1**
(43) Date of publication of application: **05.02.2025**
(21) Application number: 23811418.5
(22) Date of filing: 23.03.2023
(51) Int. Cl.: B23P 19/06

(54) **FASTENING DEVICE AND METHOD OF CONTROLLING FASTENING DEVICE**

(30) Priority: 26.05.2022 JP 2022086028
(71) Applicant: Mitsubishi Heavy Industries Aero Engines, Ltd., Komaki-shi, Aichi 485-0826, (JP)
(72) Inventor: EGASHIRA, Kento, Komaki-shi, Aichi 485-0826 (JP); KURIHARA, Hiroshi, Komaki-shi, Aichi 485-0826 (JP); NAKAMURA, Futoshi, Komaki-shi, Aichi 485-0826 (JP); ISHIDA, Makoto, Tokyo 100-8332 (JP); ASANO, Shin, Tokyo 100-8332 (JP); SUGIURA, Atsushi, Tokyo 100-8332 (JP)
(74) Representative: Studio Torta S.p.A.
(86) International application number: PCT/JP2023/011461
(87) International publication number: WO 2023/228539

(57) **Abstract**

Provided is a fastening device comprising: a nut retention mechanism (10); a moving mechanism (20) attached to the nut retention mechanism (10); a grip mechanism (30) attached to the moving mechanism (20); a positioning mechanism that positions the nut retention mechanism (10) to be in a predetermined posture at a predetermined position on a three-dimensional space; and a control device that controls the moving mechanism (20) and the grip mechanism (30) to grip a washer (4) while the nut retention mechanism (10) is retaining the nut (3), controls the positioning mechanism to insert a bolt (2a) into the washer (4), controls the moving mechanism (20) to bring the nut (3) into contact with the bolt (2a) while the grip mechanism (30) is gripping the washer (4), and controls a rotation part (12) to rotate a retention part (11) around an axis (Z1) while the nut (3) is in contact with the bolt (2a) and fasten the nut (3) on the bolt (2a).

## Description

### Technical Field

The present disclosure relates to a fastening device and a method for controlling a fastening device.

### Background Art

In the related art, a fastening system is known in which a nut is fastened to a bolt with a screw groove by holding and rotating the nut using a fastening member runner (for example, refer to PTL 1). In the fastening system of PTL 1, heat resistance reinforcement or pressure resistance reinforcement is achieved by sandwiching a plate member between the fastening member and a member to be fastened.

### Citation List

### Patent Literature

[PTL 1] Japanese Unexamined Patent Application Publication No. 2020-146801

### Summary of Invention

### Technical Problem

There is a demand for automating assembly operation of fastening a nut to a bolt. However, to automate this operation, it is necessary to position the nut with respect to the bolt in a state where a plate member, such as a washer, is inserted into the bolt to fix its position, and then perform the operation of fastening the nut to the bolt. However, in PTL 1, it is necessary to insert the plate member into a plurality of bolts fixed to the member to be fastened in advance, and thus the assembly operation cannot be automated. In addition, in order to fasten the nut to the bolt while keeping the position of the plate member fixed to the member to be fastened, a separate tool for fixing the position of the plate member is required. Furthermore, it is necessary to use a separate tool to fix the position of the plate member with respect to the member to be fastened.

In view of the above circumstances, an object of the present disclosure is to provide a fastening device and a method for controlling a fastening device, capable of automating the operation of inserting a washer into a bolt protruding from a member to be fastened and fastening a nut to the bolt.

### Solution to Problem

In order to solve the above issues, a fastening device and a method for controlling a fastening device according to an aspect of the present disclosure adopt the following means.

According to an aspect of the present disclosure, there is provided a fastening device that inserts a washer into a bolt protruding from a member to be fastened and fastens a nut to the bolt, the device including: a nut holding mechanism that has a holding portion formed in a cylindrical shape extending along an axis and holding the nut at a tip portion, and a rotating portion that rotates the holding portion around the axis; a movement mechanism that is attached to the nut holding mechanism and is movable with respect to the nut holding mechanism along the axis; a gripping mechanism that is attached to the movement mechanism and brings a pair of gripping portions close to or away from each other along a direction orthogonal to the axis; a positioning mechanism that positions the nut holding mechanism at a predetermined position in a three-dimensional space to have a predetermined posture; and a control unit that causes the movement mechanism and the gripping mechanism to bring the pair of gripping portions close to each other in front of the tip portion along the axis to grip the washer in a state where the nut holding mechanism holds the nut, causes the positioning mechanism to insert the bolt into the washer, causes the movement mechanism to bring the nut in contact with the bolt in a state where the gripping mechanism grips the washer, and causes the rotating portion to rotate the holding portion around the axis to fasten the nut to the bolt in a state where the nut is in contact with the bolt.

In addition, according to an aspect of the present disclosure, there is provided a method of controlling a fastening device that inserts a washer into a bolt protruding from a member to be fastened and fastens a nut to the bolt, the fastening device including a nut holding mechanism that has a holding portion formed in a cylindrical shape extending along an axis and holding the nut at a tip portion, and a rotating portion that rotates the holding portion around the axis, a movement mechanism that is attached to the nut holding mechanism and is movable with respect to the nut holding mechanism along the axis, a gripping mechanism that is attached to the movement mechanism and brings a pair of gripping portions close to or away from each other along a direction orthogonal to the axis, and a positioning mechanism that positions the nut holding mechanism at a predetermined position in a three-dimensional space to have a predetermined posture, the method including: a gripping step of causing the gripping mechanism to bring the pair of gripping portions close to each other in front of the tip portion along the axis to grip the washer in a state where the nut holding mechanism holds the nut; an insertion step of causing the positioning mechanism to insert the bolt into the washer; and a fastening step of causing the movement mechanism to bring the nut in contact with the bolt in a state where the gripping mechanism grips the washer, and causing the rotating portion to rotate the holding portion around the axis to fasten the nut to the bolt in a state where the nut is in contact with the bolt.

### Advantageous Effects of Invention

According to the present disclosure, it is possible to provide a fastening device and a method for controlling a fastening device, capable of automating the operation of inserting a washer into a bolt protruding from a member to be fastened and fastening a nut to the bolt.

### Brief Description of Drawings

Fig. 1 is a partial cross-sectional view showing a plate-shaped member and a panel attached to the plate-shaped member.
Fig. 2 is a partial cross-sectional view showing a state where a nut is fastened to the bolt of the panel shown in Fig. 1.
Fig. 3 is a perspective view showing a fastening device according to an embodiment of the present disclosure.
Fig. 4 is a perspective view showing the fastening device of an embodiment of the present disclosure, and shows a state where a gripping mechanism is moved forward by a movement mechanism.
Fig. 5 is a perspective view showing a state where the gripping mechanism grips a washer.
Fig. 6 is a block diagram showing a schematic configuration of a fastening device according to an embodiment of the present disclosure.
Fig. 7 is a flowchart showing a method of controlling a fastening device according to an embodiment of the present disclosure.
Fig. 8 is a front view of the fastening device showing a state before a nut holding mechanism holds the nut.
Fig. 9 is a front view of the fastening device showing a state where the nut holding mechanism holds the nut.
Fig. 10 is a front view of the fastening device showing a state where the nut holding mechanism holding the nut is separated from an installation surface.
Fig. 11 is a front view of the fastening device showing a state where the gripping mechanism is in contact with the installation surface.
Fig. 12 is a front view of the fastening device showing a state where the washer is gripped by the gripping mechanism.
Fig. 13 is a cross-sectional view taken along line A-A of the gripping mechanism shown in Fig. 11.
Fig. 14 is a view showing an example in which a circular washer is gripped by the gripping mechanism.
Fig. 15 is a front view of the fastening device showing a state before a washer is inserted into the bolt.
Fig. 16 is a front view of the fastening device showing a state where a washer is inserted into the bolt.
Fig. 17 is a front view of the fastening device showing a state where the nut is in contact with the bolt.
Fig. 18 is a front view of the fastening device showing a state where a nut is fastened to the bolt.
Fig. 19 is a front view of the fastening device showing a state where the washer is released from the gripping state by the gripping mechanism.
Fig. 20 is a front view of the fastening device showing a state where the nut holding mechanism is separated from the nut.

### Description of Embodiments

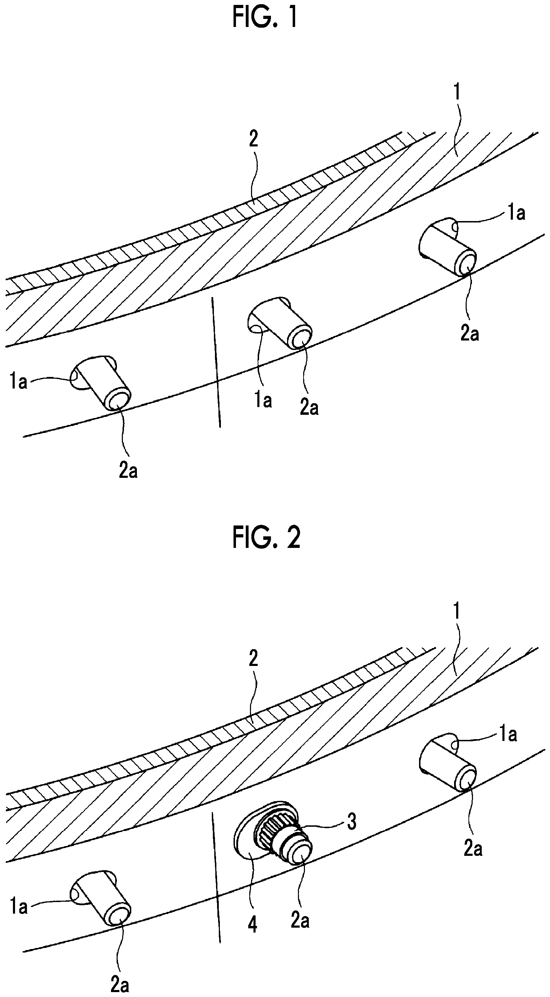

Hereinafter, a fastening device and a method for controlling a fastening device according to an embodiment of the present disclosure will be described with reference to the drawings. Fig. 1 is a partial cross-sectional view showing a plate-shaped member (member to be fastened) 1 and a panel (member to be fastened) 2 attached to the plate-shaped member 1. Fig. 2 is a partial cross-sectional view showing a state where a nut 3 is fastened to a bolt 2a of the panel 2 shown in Fig. 1. The fastening device 100 of the present embodiment is a device that inserts a washer 4 into a bolt (screw portion) 2a protruding from a through-hole 1a formed in the plate-shaped member 1 and fastens the bolt 2a with the nut 3.

As shown in Figs. 1 and 2, a plurality of through-holes 1a are formed in the plate-shaped member 1. The plate-shaped member is a metal component with a cylindrical shape, formed of, for example, a metal plate. The panel 2 is an arc-shaped component corresponding to the shape of the outer peripheral surface of the plate-shaped member 1, and is configured by, for example, applying heat resistance treatment (such as ceramic coating) to the surface of a cast plate material.

On the outer peripheral surface of the panel 2, a plurality of bolts 2a protruding outward are provided. On the outer peripheral surface of the bolt 2a, a male screw for fastening the nut 3 is formed. The panel 2 is configured such that the bolt 2a is inserted into the through-hole 1a formed in the plate-shaped member 1, and the washer 4 and the nut 3 are attached to the bolt 2a protruding from the through-hole 1a. On the inner peripheral surface of the nut 3, a female screw is formed, which is fastened to the male screw of the bolt 2a. The panel 2 is fixed to the plate-shaped member 1 by fastening the nut 3 to the bolt 2a.

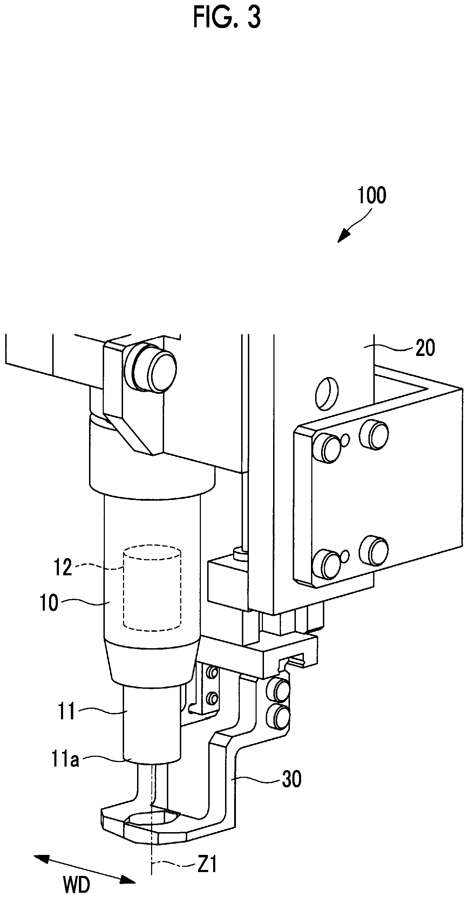

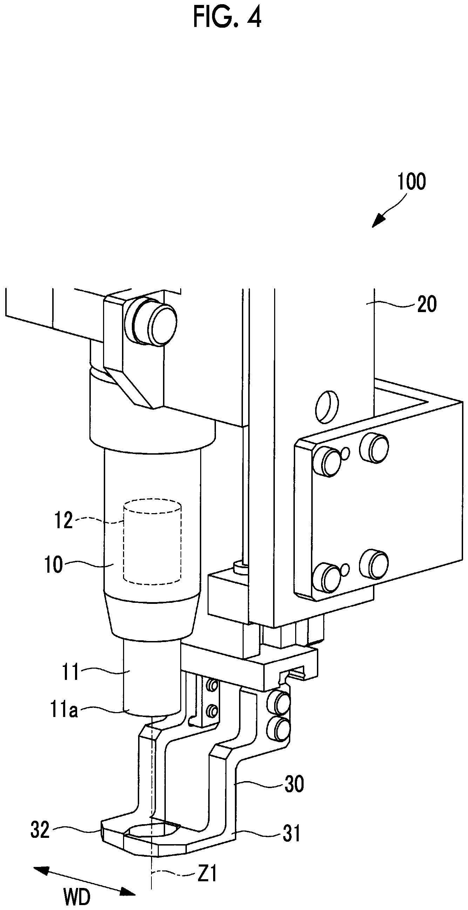

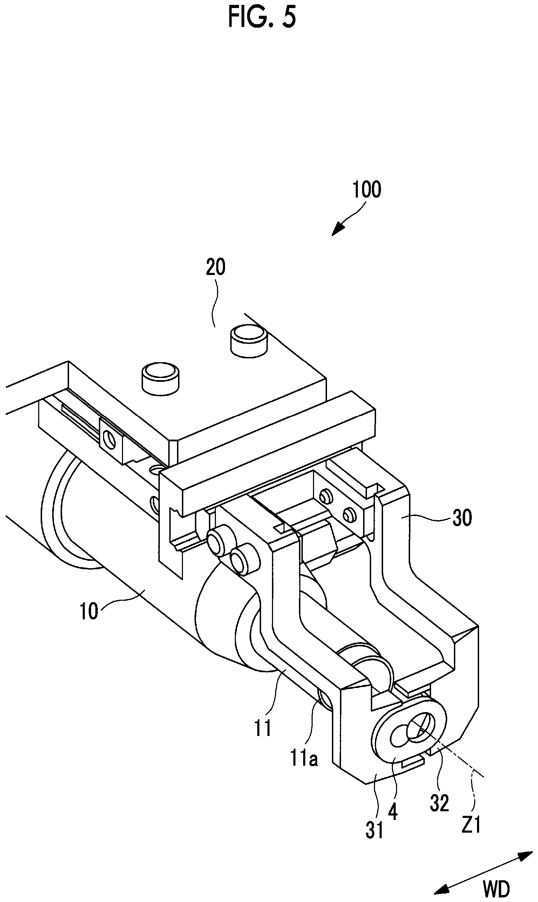

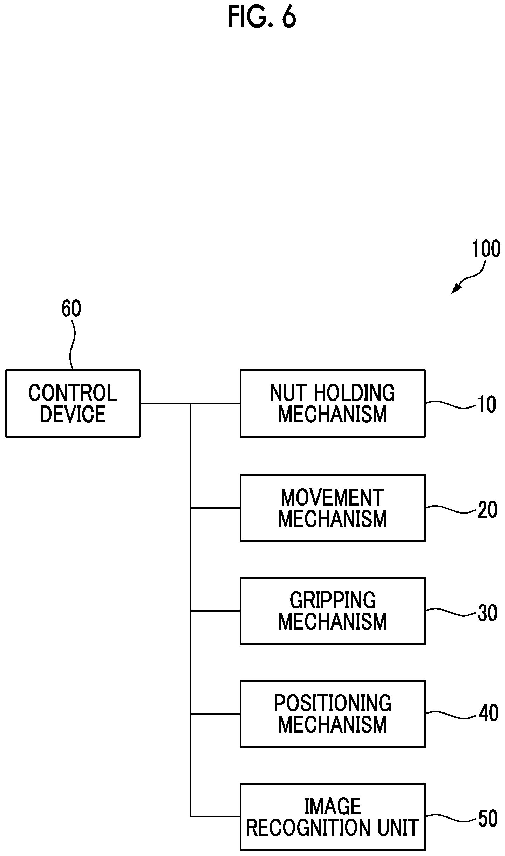

Fig. 3 is a perspective view showing the fastening device 100 of the present embodiment. Fig. 4 is a perspective view showing the fastening device 100 of the present embodiment, which shows a state where the gripping mechanism 30 is moved forward by the movement mechanism 20. Fig. 5 is a perspective view showing a state where the gripping mechanism 30 grips the washer 4. Fig. 6 is a block diagram showing the schematic configuration of the fastening device 100 according to the present embodiment. As shown in Figs. 3 to 6, the fastening device 100 includes a nut holding mechanism 10, a movement mechanism 20, a gripping mechanism 30, a positioning mechanism 40, an image recognition unit 50, and a control device (control unit) 60.

The nut holding mechanism 10 is a mechanism that holds the nut 3 and rotates it to fasten the nut 3 to the bolt 2a. The nut holding mechanism 10 includes a holding portion 11 and a rotating portion 12. The holding portion 11 is a member formed in a cylindrical shape extending along the axis Z1 and that holds the nut 3 at the tip portion 11a. The rotating portion 12 is a mechanism that rotates the holding portion 11 around the axis Z1 and is configured, for example, by an electric motor.

The movement mechanism 20 is a mechanism that is attached to the nut holding mechanism 10 and is movable along the axis Z1 with respect to the nut holding mechanism 10. The movement mechanism 20 moves relative to the nut holding mechanism 10 by means of a driving mechanism (for example, an electric motor). As shown in Figs. 3 and 4, the movement mechanism 20 moves the gripping mechanism 30, which is attached to the movement mechanism 20, along the axis Z1.

The gripping mechanism 30 is a mechanism that is attached to the movement mechanism 20 and moves the pair of gripping portions 31 and 32 close to or away from each other along the width direction WD, which is orthogonal to the axis Z1. The gripping mechanism 30 moves relative to the nut holding mechanism 10 along with the movement mechanism 20 as the movement mechanism 20 moves relative to the nut holding mechanism 10.

The positioning mechanism 40 is a mechanism that positions the nut holding mechanism 10 to be in a predetermined posture at a predetermined position in three-dimensional space. The positioning mechanism 40 is, for example, a six-axis articulated robot to which the nut holding mechanism 10, the movement mechanism 20, and the gripping mechanism 30 are attached at an end portion.

The image recognition unit 50 is a unit that captures an image of the region along an extension line of the axis Z1 (refer to Fig. 6) in front of the holding portion 11 of the nut holding mechanism 10 using an imaging device (not shown) and recognizes the position and posture of the nut 3 and the washer 4 in three-dimensional space. In addition, the image recognition unit 50 recognizes the position and the posture of the bolt 2a in the three-dimensional space. The image recognition unit 50 recognizes the position and the posture of the nut 3, the washer 4, and the bolt 2a in three-dimensional space by analyzing the image captured by the imaging device using an analysis unit (not shown).

The control device 60 is a device that controls each component of the fastening device 100. The control device 60 includes, for example, a central processing unit (CPU: processor), a main storage device (main memory), a secondary storage device (secondary storage: memory), and similar components. Further, the control device 60 may be equipped with a communication unit for transmitting and receiving information to and from other devices.

For example, the main storage device includes a writable memory such as a cache memory or a random access memory (RAM), and is used as a work region for reading an execution program of the CPU and writing processed data of the execution program. The secondary storage device is a non-transitory computer readable storage medium. The secondary storage device is, for example, a magnetic disk, a magneto-optical disk, a CD-ROM, a DVD-ROM, a semiconductor memory, or the like.

To realize various functions, a series of processes are stored in the secondary storage device in a form of a program, and the CPU reads this program into the main storage device and executes information processing and calculation processing, thereby realizing various functions. The program may be applied in various forms, such as being installed in advance in a secondary storage device, provided in a state of being stored in a computer-readable storage medium, or distributed via communication means using wired or wireless methods. The computer-readable storage medium is a magnetic disk, a magneto-optical disk, a CD-ROM, a DVD-ROM, a semiconductor memory, or the like.

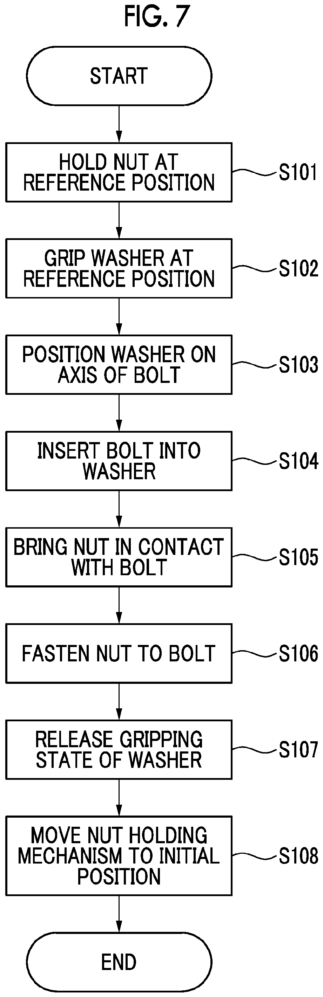

Next, the operation of fastening the nut 3 to the bolt 2a using the fastening device 100 of the present embodiment will be described. Fig. 7 is a flowchart showing the control method for the fastening device 100 according to an embodiment of the present disclosure. Each process shown in Fig. 7 is performed by the control device 60 executing the control program.

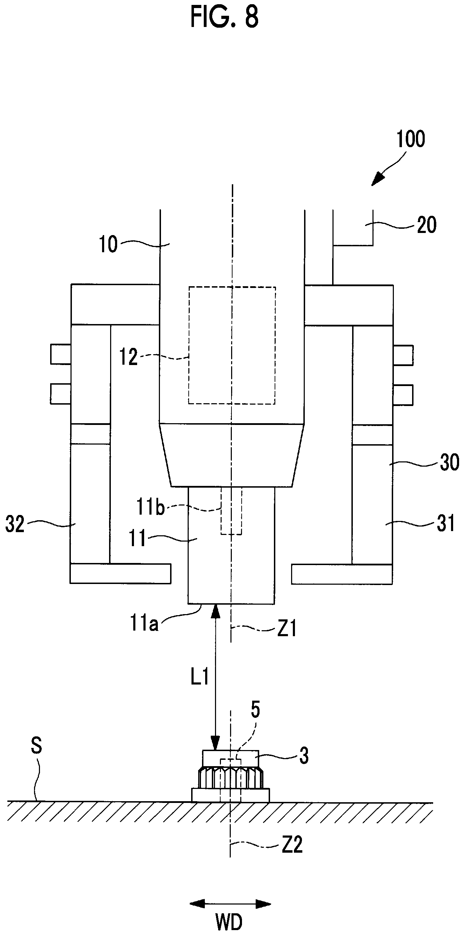

In step S101, the control device 60 causes the image recognition unit 50 and the positioning mechanism 40 to hold the nut 3 at the reference position. The reference position is a position where the positioning pin 5 is disposed on the installation surface S, as shown in Fig. 8. The control device 60 moves the nut holding mechanism 10 to a position near the nut 3, which is inserted in advance into the positioning pin 5 on the installation surface S, using the positioning mechanism 40.

The image recognition unit 50 recognizes the position and the posture of the nut 3 in three-dimensional space. The control device 60 controls the positioning mechanism 40 based on the recognition result from the image recognition unit 50, such that the axis Z2, which is the central axis of the nut 3, and the axis Z1 of the holding portion 11 are coaxial at a position separated from the nut 3 by the distance L1, which is the state shown in Fig. 8. Fig. 8 is a front view of the fastening device 100 showing a state before the nut holding mechanism 10 holds the nut 3.

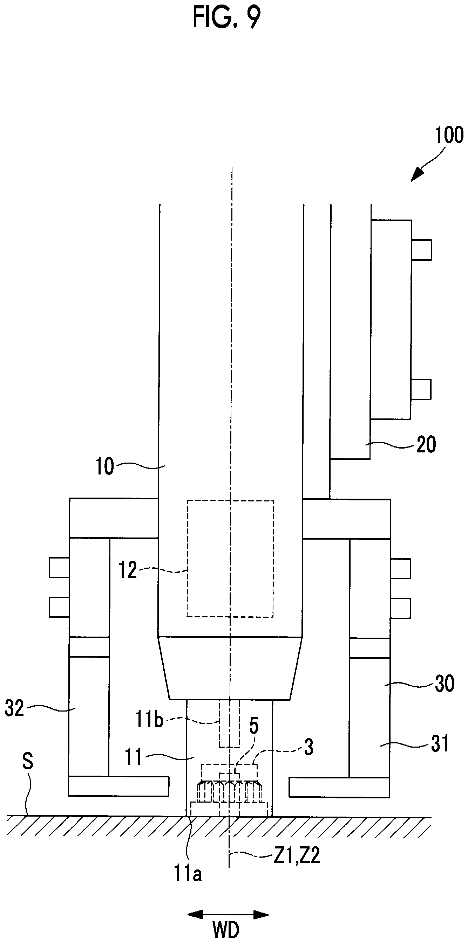

The control device 60 causes the positioning mechanism 40 to move the nut holding mechanism 10 toward the installation surface S along the axis Z1 from the state shown in Fig. 8, and to bring the nut 3 into a state of being held inside the tip portion 11a of the holding portion 11 as shown in Fig. 9. Fig. 9 is a front view of the fastening device 100 showing a state where the nut holding mechanism 10 holds the nut 3.

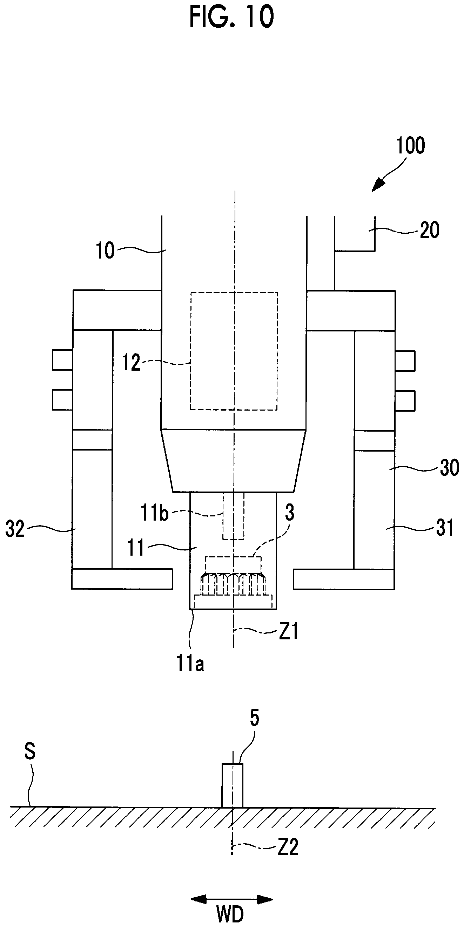

The holding portion 11 holds the nut 3 at the tip portion 11a by suctioning the nut 3 disposed at the tip portion 11a, with the suction portion 11b which suctions air. The control device 60 causes the positioning mechanism 40 to separate the nut holding mechanism 10 from the installation surface S along the axis Z1 in a state where the holding portion 11 holds the nut 3, which is the state shown in Fig. 10. Fig. 10 is a front view of the fastening device 100 showing a state where the nut holding mechanism 10, which holds the nut 3, is separated from the installation surface S.

In step S102, the control device 60 causes the movement mechanism 20 and the gripping mechanism 30 to grip the washer 4 at the reference position. The reference position of the washer 4 is a position where the washer 4 is disposed in advance, and different from the reference position of the nut 3. The control device 60 causes the movement mechanism 20 and the gripping mechanism 30 to bring the pair of gripping portions 31 and 32 close to each other in front of the tip portion 11a along the axis Z1 to grip the washer 4 in a state where the nut holding mechanism 10 holds the nut 3.

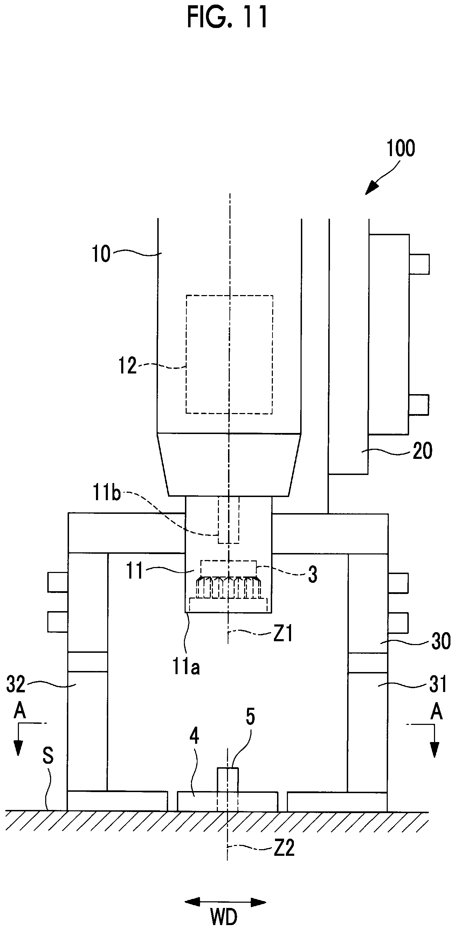

The control device 60 controls the movement mechanism 20 such that the gripping mechanism 30 moves close to the installation surface S along the axis Z1, in a state where the axis Z1 and the axis Z2 of the positioning pin 5, where the washer 4 is disposed, coincide, which sets the gripping mechanism 30 in a state of being in contact with the installation surface S, as shown in Fig. 11. Fig. 11 is a front view of the fastening device 100 showing a state where the gripping mechanism 30 is in contact with the installation surface S. Note that the control device 60 may control the movement mechanism 20 such that the gripping mechanism 30 is in a state of being close to the installation surface S with a minute gap with the installation surface S without coming into contact with the installation surface S.

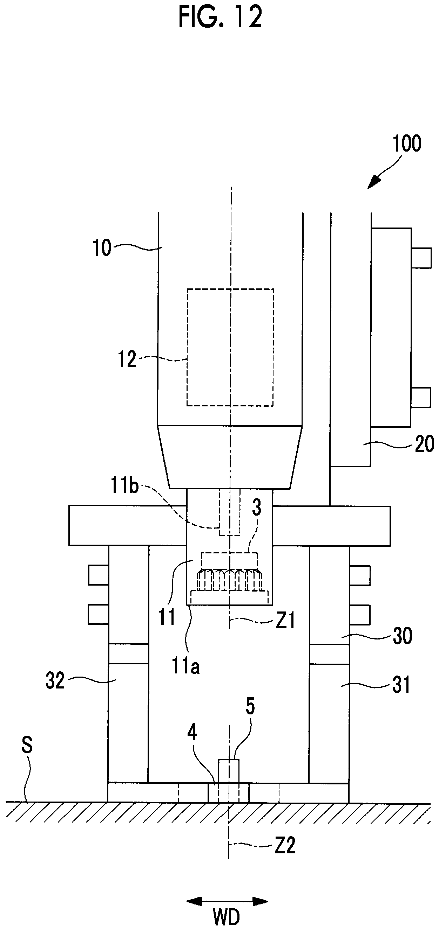

The control device 60 controls the gripping mechanism 30 such that the pair of gripping portions 31 and 32 are brought close to each other along the width direction WD to grip the washer 4 in the state shown in Fig. 11, which is the state shown in Fig. 12. Fig. 12 is a front view of the fastening device 100 showing a state where the washer 4 is gripped by the gripping mechanism 30.

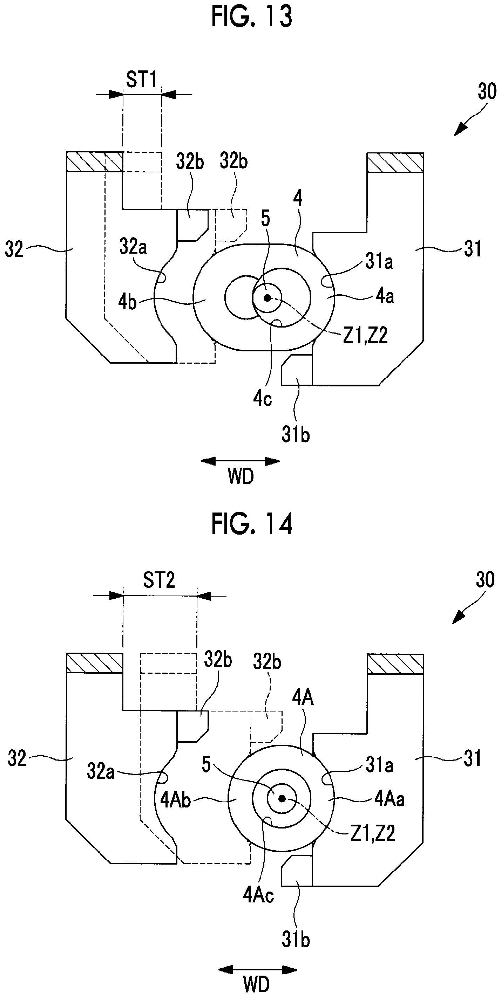

Here, the operation of gripping the washer 4 by bringing the pair of gripping portions 31 and 32 close to each other along the width direction WD will be described with reference to Fig. 13. Fig. 13 is a cross-sectional view taken along line A-A of the gripping mechanism 30 shown in Fig. 11. As shown in Fig. 13, the washer 4 of the present embodiment is formed in an elliptical shape in plan view, with end portions 4a and 4b in the long axis direction disposed in the width direction WD. A through-hole 4c for inserting the bolt 2a is formed on the end portion 4a side of the washer 4.

The gripping mechanism 30 grips the end portions 4a and 4b of the washer 4 in the long axis direction using the gripping surfaces 31a and 32a of the pair of gripping portions 31 and 32. The gripping portion 31 has a protruding portion 31b that prevents the end portion 4a of the washer 4 in the long axis direction from rotating in the rotation direction on the downstream side of the rotation direction (clockwise direction) of the rotating portion 12 in plan view in the direction along the axes Z1 and Z2.

The gripping portion 32 has a protruding portion 32b that prevents the end portion 4b of the washer 4 in the long axis direction from rotating in the rotation direction on the downstream side of the rotation direction (clockwise direction) of the rotating portion 12 in plan view in the direction along the axes Z1 and Z2. The protruding portions 31b and 32b prevent the washer 4 from rotating and deviating from a desired phase due to the rotational force when the nut 3 is fastened to the bolt 2a. The desired phase is, for example, a phase in which a ventilation hole (not shown) formed in the plate-shaped member 1 is not obstructed by the end portions 4a and 4b of the washer 4 in the long axis direction.

The gripping mechanism 30 moves the gripping portion 32 in the width direction WD, which is orthogonal to the axis Z1 in a state in which the position of the gripping portion 31 in the width direction WD is fixed, and thus, the end portions 4a and 4b of the washer 4 in the long axis direction are gripped by the gripping surfaces 31a and 32a of the pair of gripping portions 31 and 32. As shown in Fig. 13, when the gripping portion 32 is moved along the width direction WD in a state in which the position of the gripping portion 31 in the width direction WD is fixed, the gripping portion 32 moves from the position indicated by the solid line to the position indicated by the broken line.

The gripping mechanism 30 can grip the washer 4 in the elliptical shape shown in Fig. 13, and the gripping mechanism can also grip the washer 4 in the circular shape shown in Fig. 14. Fig. 14 is a diagram showing an example of the gripping mechanism 30 gripping a circular washer 4A. As shown in Fig. 14, the washer 4A in the modification example is formed in a circular shape in plan view, with the end portions 4Aa and 4Ab disposed in the width direction WD. At the center of the washer 4A, a through-hole 4Ac for inserting the bolt 2a is formed.

As shown in Fig. 13, the movement amount of the gripping portion 32 along the width direction WD is ST1. On the other hand, as shown in Fig. 14, the movement amount of the gripping portion 32 along the width direction WD is ST2, which is larger than ST1. The difference between ST1 and ST2 is equal to the difference between the length of washer 4 in the width direction WD and the length of washer 4A in the width direction WD. In the present embodiment, the gripping mechanism 30 can grip a washer of any size by adjusting the movement amount of the gripping portion 32 along the width direction WD in a state where the position of the gripping portion 31 in the width direction WD is fixed to one end portion of the washer.

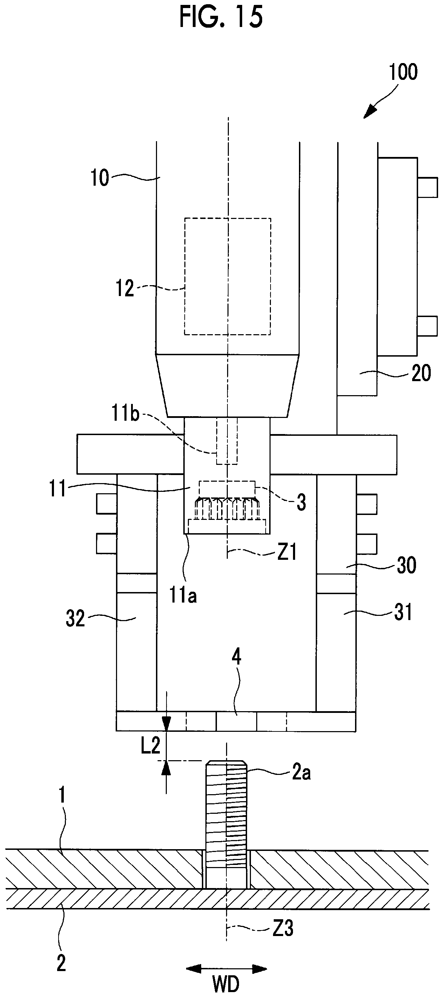

In step S103, the control device 60 causes the positioning mechanism 40 to position the washer 4 on the axis Z3 of the bolt 2a. The image recognition unit 50 recognizes the position and the posture of the bolt 2a in three-dimensional space. The control device 60 controls the positioning mechanism 40 based on the recognition result from the image recognition unit 50 such that the axis Z3, which is the central axis of the bolt 2a, and the axis Z1 of the holding portion 11 are coaxial at a position where the gripping portions 31 and 32 are separated from the bolt 2a by the distance L2, which is the state shown in Fig. 15. Fig. 15 is a front view of the fastening device 100 showing a state before the washer 4 is inserted into the bolt 2a.

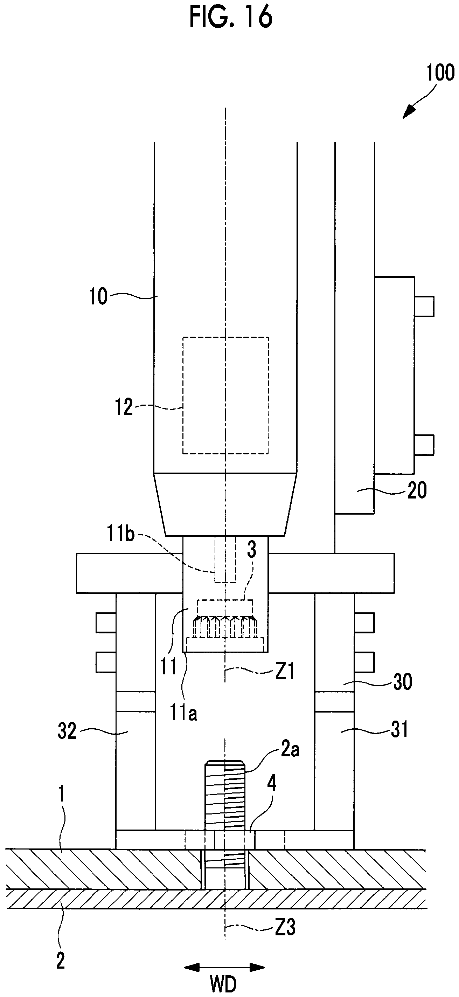

In step S104, the control device 60 causes the positioning mechanism 40 to insert the washer 4 into the bolt 2a. In the state shown in Fig. 15, the control device 60 controls the positioning mechanism 40 such that the gripping mechanism 30 approaches the bolt 2a along the axis Z1, and brings the gripping mechanism 30 into contact with the plate-shaped member 1 as shown in Fig. 16. Fig. 16 is a front view of the fastening device 100 showing a state where the washer 4 is inserted into the bolt 2a. The control device 60 may control the positioning mechanism 40 such that the gripping mechanism 30 is in a state of being close to the plate-shaped member 1 with a minute gap, without coming into contact with the plate-shaped member 1.

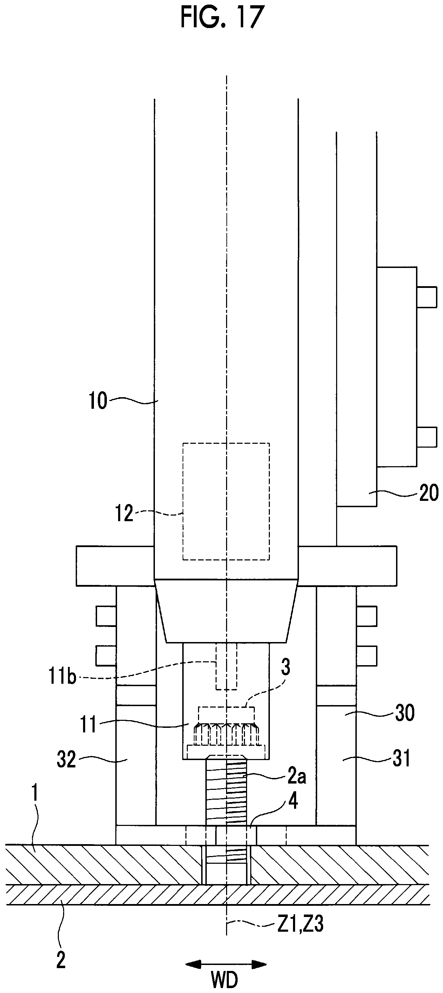

In step S105, the control device 60 causes the movement mechanism 20 to bring the nut 3 into contact with the bolt 2a in a state where the gripping mechanism 30 grips the washer 4. The control device 60 operates the movement mechanism 20 to bring the tip portion 11a of the holding portion 11 close to the bolt 2a from the state shown in Fig. 16, which is the state shown in Fig. 17. Fig. 17 is a front view of the fastening device showing a state where the nut 3 is in contact with the bolt 2a.

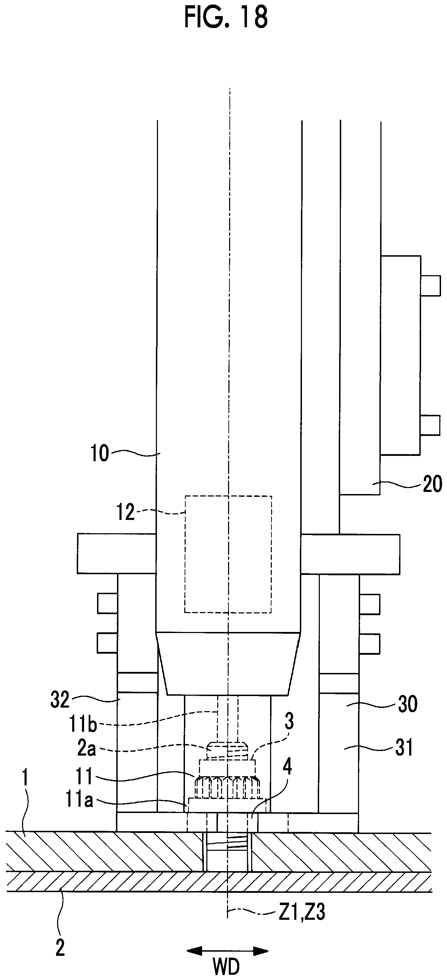

In step S106, the control device 60 causes the rotating portion 12 to rotate the holding portion 11 around the axis Z1, to fasten the nut 3 to the bolt 2a in a state where the nut 3 is in contact with the bolt 2a. The control device 60, starting from the state shown in Fig. 17, rotates the holding portion 11 in the direction in which the nut 3 is fastened to the bolt 2a by the rotating portion 12, causing the tip portion 11a of the holding portion 11 to gradually approach the washer 4. The control device 60 rotates the nut 3 until the nut 3 comes into contact with the washer 4 and a predetermined fastening strength is applied, thereby achieving the fastening state shown in Fig. 18. Fig. 18 is a front view of the fastening device 100 showing a state where the nut 3 is fastened to the bolt 2a.

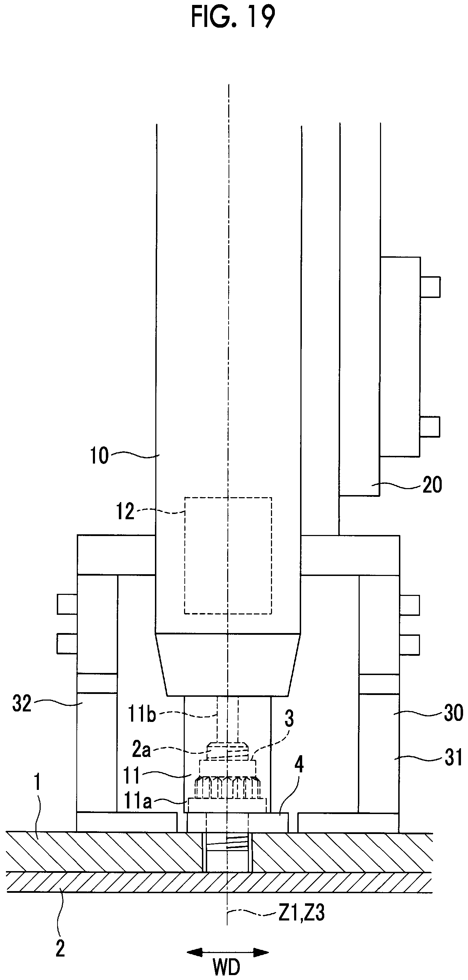

In step S107, the control device 60 causes the gripping mechanism 30 to release the gripping state where the gripping mechanism 30 grips the washer 4. In the state shown in Fig. 18, the control device 60 causes the gripping mechanism 30 to release the gripping state in which the washer 4 is gripped, by separating the pair of gripping portions 31 and 32 along the width direction WD, which is the state shown in Fig. 19. Fig. 19 is a front view of the fastening device 100 showing a state where the gripping mechanism 30 releases the gripping state of the washer 4.

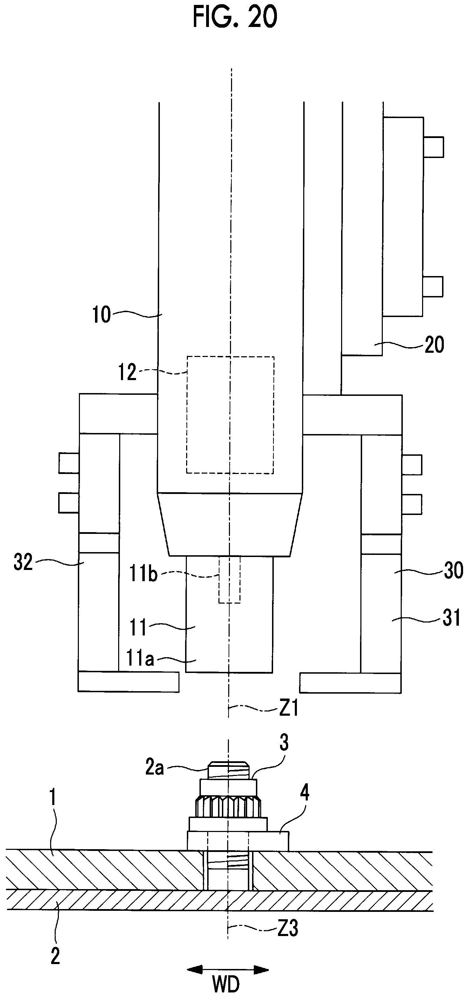

In step S108, the control device 60 causes the positioning mechanism 40 to move the nut holding mechanism 10 to the initial position. The control device 60 causes the positioning mechanism 40 to move the nut holding mechanism 10 away from the plate-shaped member 1 along the axis Z1, which is the state shown in Fig. 20. Fig. 20 is a front view of the fastening device 100 showing a state where the nut holding mechanism 10 is separated from the nut 3.

The control device 60 controls the positioning mechanism 40 such that the nut holding mechanism 10 moves to the initial position from the state shown in Fig. 20, thereby finishing the process of the flowchart. The operations of steps S101 to S108 described above show operation of attaching one washer 4 and one nut 3 to one bolt 2a. The control device 60 repeats the operations of steps S101 to S 108 a plurality of times in order to attach the washer 4 and the nut 3 to each of the plurality of bolts 2a shown in Figs. 1 and 2.

In the operation of attaching the washer 4 and the nut 3 to each of the plurality of bolts 2a, the plurality of washers 4 and the plurality of nuts 3 are installed in advance at different reference positions on the installation surface S. The fastening device 100 holds each of the washer 4 and the nut 3, which are installed in advance at different reference positions on the installation surface S, and attaches them to each of the plurality of bolts 2a.

According to the fastening device 100 and the method for controlling a fastening device 100 of the present embodiment, the following actions and effects are achieved.

According to the fastening device 100 of the present embodiment, the washer 4 is gripped by the pair of gripping portions 31 and 32 in front of the tip portion 11a along the axis Z1 in a state where the nut holding mechanism 10 holds the nut 3, and the bolt 2a is inserted into the washer 4. In a state where the gripping mechanism 30 grips the washer 4, the nut 3 comes into contact with the bolt 2a, and the nut 3 is fastened to the bolt 2a by rotating the holding portion 11, which holds the nut 3, around the axis Z1. Since the nut 3 is fastened to the bolt 2a in a state where the washer 4 is gripped by the pair of gripping portions 31 and 32, the operation of inserting the washer 4 into the bolt 2a protruding from the plate-shaped member 1 and fastening the nut 3 to the bolt 2a can be automated.

According to the fastening device 100 of the present embodiment, even in a case where the washer 4, which has an elliptical shape in plan view, rotates in the rotation direction when the nut 3 is fastened to the bolt 2a, the end portion 4a and 4b of the washer 4 in the long axis direction collides with the protruding portions 31b and 32b. Accordingly, the washer 4 can be appropriately prevented from rotating and deviating from the desired phase.

According to the fastening device 100 of the present embodiment, by changing the movement amount in the direction orthogonal to the axis Z1 of one of the pair of gripping portions 31 and 32 in a state where the other of the pair of gripping portions 31 and 32 is fixed, a washer of any shape (for example, elliptical or circular) can be gripped by the pair of gripping portions 31 and 32.

According to the fastening device 100 of the present embodiment, since the nut 3 which is disposed at the tip portion 11a is suctioned and held by the holding portion 11, even in a case where the nut holding mechanism 10 is brought into any posture by the positioning mechanism 40, the state of holding the nut 3 can be reliably maintained.

The fastening device and the method for controlling a fastening device according to the present embodiment described above can be understood as follows, for example.

According to a first aspect of the present disclosure, there is provided a fastening device (100) that inserts a washer (4) into a bolt (2a) protruding from a member to be fastened (1, 2) and fastens a nut to the bolt, and the fastening device includes: a nut holding mechanism (10) that has a holding portion (11) formed in a cylindrical shape extending along an axis (X) and holds the nut (3) at a tip portion, and a rotating portion (12) that rotates the holding portion around the axis; a movement mechanism (20) that is attached to the nut holding mechanism and is movable with respect to the nut holding mechanism along the axis; a gripping mechanism (30) that is attached to the movement mechanism and brings a pair of gripping portions (31, 32) close to or away from each other along a direction orthogonal to the axis; a positioning mechanism (40) that positions the nut holding mechanism at a predetermined position in a three-dimensional space to have a predetermined posture; and a control unit (60) that causes the movement mechanism and the gripping mechanism to bring the pair of gripping portions close to each other in front of the tip portion along the axis to grip the washer in a state where the nut holding mechanism holds the nut, causes the positioning mechanism to insert the bolt into the washer, causes the movement mechanism to bring the nut in contact with the bolt in a state where the gripping mechanism grips the washer, and causes the rotating portion to rotate the holding portion around the axis to fasten the nut to the bolt in a state where the nut is in contact with the bolt.

According to the fastening device of the first aspect of the present disclosure, the washer is gripped by the pair of gripping portions in front of the tip portion along the axis in a state where the nut is held by the nut holding mechanism, and the bolt is inserted into the washer. In a state where the gripping mechanism grips the washer, the nut comes into contact with the bolt, and the nut is fastened to the bolt by rotating the holding portion, which holds the nut, around the axis. Since the nut is fastened to the bolt in a state where the washer is gripped by the pair of gripping portions, the operation of inserting the washer into the bolt protruding from the member to be fastened and fastening the nut to the bolt can be automated.

In the fastening device according to a second aspect of the present disclosure, in the first aspect, the washer is formed in a substantially elliptical shape in a plan view, the gripping mechanism grips an end portion of the washer in a long axis direction by the pair of gripping portions, and the gripping portion has a protruding portion that prevents the end portion of the washer in the long axis direction from rotating in a rotation direction of the rotation portion on a downstream side of the rotation direction of the rotating portion when viewed in a plan view in a direction along the axis.

According to the fastening device of the second aspect of the present disclosure, even when the washer, which has an elliptical shape in plan view, rotates in the rotation direction when the nut is fastened to the bolt, the end portion of the washer in the long axis direction collides with the protruding portion. Accordingly, the washer can be appropriately prevented from rotating and deviating from the desired phase.

In the fastening device according to a third aspect of the present disclosure, in the first or the second aspect, the gripping portion grips the washer by moving one of the pair of gripping portions in the direction orthogonal to the axis in a state where the other of the pair of gripping portions is fixed.

According to the fastening device of the third aspect of the present disclosure, the washer having any shape (for example, an elliptical shape or a circular shape) can be gripped by the pair of gripping portions by changing the movement amount in the direction orthogonal to the axis of one of the pair of gripping portions in a state where the other of the pair of gripping portions is fixed.

In the fastening device according to a fourth aspect of the present disclosure, in the first or the second aspect, the holding portion holds the nut by suctioning the nut disposed at the tip portion.

According to the fastening device of the fourth aspect of the present disclosure, since the nut disposed at the tip portion is suctioned and held by the holding portion, even when the nut holding mechanism is brought into any posture by the positioning mechanism, the state of holding the nut can be reliably maintained.

According to a fifth aspect of the present disclosure, there is provided a method of controlling a fastening device that inserts a washer into a bolt protruding from a member to be fastened and fastens a nut to the bolt, the fastening device includes a nut holding mechanism that has a holding portion formed in a cylindrical shape extending along an axis and holding the nut at a tip portion, and a rotating portion that rotates the holding portion around the axis, a movement mechanism that is attached to the nut holding mechanism and is movable with respect to the nut holding mechanism along the axis, a gripping mechanism that is attached to the movement mechanism and brings a pair of gripping portions close to or away from each other along a direction orthogonal to the axis, and a positioning mechanism that positions the nut holding mechanism at a predetermined position in a three-dimensional space to have a predetermined posture, and the method of controlling a fastening device includes: a gripping step (S102) of causing the gripping mechanism to bring the pair of gripping portions close to each other in front of the tip portion along the axis to grip the washer in a state where the nut holding mechanism holds the nut; an insertion step (S104) of causing the positioning mechanism to insert the bolt into the washer; and a fastening step (S 106) of causing the movement mechanism to bring the nut in contact with the bolt in a state where the gripping mechanism grips the washer, and causing the rotating portion to rotate the holding portion around the axis to fasten the nut to the bolt in a state where the nut is in contact with the bolt.

According to the control method of the fastening device of the fifth aspect of the present disclosure, the washer is gripped by the pair of gripping portions in front of the tip portion along the axis in a state where the nut is held by the nut holding mechanism, and the washer is inserted into the bolt. In a state where the gripping mechanism grips the washer, the nut comes into contact with the bolt, and the nut is fastened to the bolt by rotating the holding portion, which holds the nut, around the axis. Since the nut is fastened to the bolt in a state where the washer is gripped by the pair of gripping portions, the operation of inserting the washer into the bolt protruding from the member to be fastened and fastening the nut to the bolt can be automated.

In the method of controlling a fastening device according to a sixth aspect of the present disclosure, in the gripping step, the gripping mechanism is controlled such that the washer is gripped by moving one of the pair of gripping portions in the direction orthogonal to the axis in a state where the other of the pair of gripping portions is fixed.

According to the method of controlling a fastening device of the sixth aspect of the present disclosure, the washer with an arbitrary shape (for example, elliptical or circular) can be held by the pair of gripping portions by changing the movement amount in the direction orthogonal to the axis of one of the pair of gripping portions in a state where the other of the pair of gripping portions is fixed.

### Reference Signs List

1: Plate-shaped member (Member to be fastened)
1a: Through-hole
2: Panel (Member to be fastened)
2a: Bolt
3: Nut
4, 4A: Washer
4a, 4b, 4Aa, 4Ab: End portion
4c, 4Ac: Through-hole
5: Positioning pin
10: Nut holding mechanism
11: Holding portion
11a: Tip portion
11b: Suction portion
12: Rotating portion
20: Movement mechanism
30: Gripping mechanism
31: Gripping portion
31a: Gripping surface
31b: Protruding portion
32: Gripping portion
32a: Gripping surface
32b: Protruding portion
40: Positioning mechanism
50: Image recognition unit
60: Control device (Control unit)
100: Fastening device
L1, L2: Distance
S: Installation surface
WD: Width direction
Z1, Z2, Z3: Axis

## Claims

1. A fastening device that inserts a washer into a bolt protruding from a member to be fastened and fastens a nut to the bolt, the device comprising:
a nut holding mechanism that includes a holding portion formed in a cylindrical shape extending along an axis and holding the nut at a tip portion, and a rotating portion that rotates the holding portion around the axis;
a movement mechanism that is attached to the nut holding mechanism and is movable with respect to the nut holding mechanism along the axis;
a gripping mechanism that is attached to the movement mechanism and brings a pair of gripping portions close to or away from each other along a direction orthogonal to the axis;
a positioning mechanism that positions the nut holding mechanism at a predetermined position in a three-dimensional space to have a predetermined posture; and
a control unit that causes the movement mechanism and the gripping mechanism to bring the pair of gripping portions close to each other in front of the tip portion along the axis to grip the washer in a state where the nut holding mechanism holds the nut, causes the positioning mechanism to insert the bolt into the washer, causes the movement mechanism to bring the nut in contact with the bolt in a state where the gripping mechanism grips the washer, and causes the rotating portion to rotate the holding portion around the axis to fasten the nut to the bolt in a state where the nut is in contact with the bolt.

2. The fastening device according to claim 1, wherein
the washer is formed in a substantially elliptical shape in a plan view,
the gripping mechanism grips an end portion of the washer in a long axis direction by the pair of gripping portions, and
the gripping portion has a protruding portion that prevents the end portion of the washer in the long axis direction from rotating in a rotation direction of the rotating portion on a downstream side of the rotation direction of the rotating portion when viewed in a plan view in a direction along the axis.

3. The fastening device according to claim 1 or 2, wherein
the gripping portion grips the washer by moving one of the pair of gripping portions in the direction orthogonal to the axis in a state where the other of the pair of gripping portions is fixed.

4. The fastening device according to claim 1 or 2, wherein
the holding portion holds the nut by suctioning the nut disposed at the tip portion.

5. A method of controlling a fastening device that inserts a washer into a bolt protruding from a member to be fastened and fastens a nut to the bolt, the fastening device including
a nut holding mechanism that has a holding portion formed in a cylindrical shape extending along an axis and holding the nut at a tip portion, and a rotating portion that rotates the holding portion around the axis,
a movement mechanism that is attached to the nut holding mechanism and is movable with respect to the nut holding mechanism along the axis,
a gripping mechanism that is attached to the movement mechanism and brings a pair of gripping portions close to or away from each other along a direction orthogonal to the axis, and
a positioning mechanism that positions the nut holding mechanism at a predetermined position in a three-dimensional space to have a predetermined posture,
the method comprising:
a gripping step of causing the gripping mechanism to bring the pair of gripping portions close to each other in front of the tip portion along the axis to grip the washer in a state where the nut holding mechanism holds the nut;
an insertion step of causing the positioning mechanism to insert the bolt into the washer; and
a fastening step of causing the movement mechanism to bring the nut in contact with the bolt in a state where the gripping mechanism grips the washer, and causing the rotating portion to rotate the holding portion around the axis to fasten the nut to the bolt in a state where the nut is in contact with the bolt.

6. The method of controlling a fastening device according to claim 5, wherein
in the gripping step, the gripping mechanism is controlled such that the washer is gripped by moving one of the pair of gripping portions in the direction orthogonal to the axis in a state where the other of the pair of gripping portions is fixed.
